Europäisches Patentamt

European Patent Office

Office européen des brevets

(11) Numéro de publication: **0 411 235 A2**

# (12) DEMANDE DE BREVET EUROPEEN

(21) Numéro de dépôt: 89870155.2

(51) Int. Cl.5: **A47J 36/02**

(22) Date de dépôt: **20.10.89**

(30) Priorité: 31.07.89 BE 8900817

(43) Date de publication de la demande:
06.02.91 Bulletin 91/06

(84) Etats contractants désignés:
DE FR IT NL

(71) Demandeur: **N.V. NAMETA**
**St. Jobstraat 60**
**B-3540 Zolder(BE)**

(72) Inventeur: **Vanthoor, Pierre**
**Reeenlaan 89**
**B-3540 Zolder(BE)**

(74) Mandataire: **Donné, Eddy**
**Bureau M.F.J. Bockstael nv Arenbergstraat**
**13**
**B-2000 Antwerpen(BE)**

(54) **Marmite pour utilisation sur plaques de cuisson à induction.**

(57) Marmite pour l'utilisation sur plaques de cuisson, caractérisée en ce qu'elle est principalement formée par la marmite (1) en soi en acier inoxydable sous laquelle un premier disque (4) de fer doux et un deuxième disque (5) en acier inoxydable sont attachés, par exemple par soudure à haute fréquence ou à fréquence moyenne, de telle manière que le disque de fer doux est entièrement étanche à l'at-mosphère ambiante.

Fig.3

EP 0 411 235 A2

## MARMITE POUR UTILISATION SUR PLAQUES DE CUISSON À INDUCTION.

Le fait est connu qu'aujourd'hui l'attention est portée sur des plaques de cuisson qui causent le rechauffement d'une marmite placée sur celles-ci par l'entremise d'un champ magnétique.

De telles plaques de cuisson peuvent, par exemple, être formées par une plaque sous laquelle une bobine est placée, par laquelle, lorsqu'elle est mise sous tension, un champ magnétique est créé et que des marmites composées, du moins partiellement, de fer doux sont utilisées sur lesdites plaques de cuisson.

Les marmites connues à présent qui entrent en ligne de compte pour ces plaques de cuisson à induction sont formées par trois couches de métal, c'est-a-dire une couche extérieure et une couche intérieure d'acier inoxydable et une couche intermédiaire de fer doux.

Malgré que ces marmites, vues d'une perspective de rechauffement, peuvent fonctionner de manière efficace, un grand désavantage de celles-ci peut être observé dans le fait que ces trois couches se terminent à la circonférence supérieure de la marmite où, évidemment, dans la plupart des cas, le bord de la couche intérieure de fer doux reste à nu avec comme désavantage important que cette couche s'oxyde ou se met à rouiller après une période relativement courte avec les conséquences inévitables connues.

Afin d'éviter ce désavantage, des suggestions ont déja été faites de plier le bord supérieur de ladite marmite ou de l'équiper d'un rebord, c'est-a-dire de l'équiper d'un bord recourbé, l'un et l'autre de telle manière que les bords libres des trois couches deviennent invisibles.

Cette solution n'a néanmoins pas empêché que la couche intermédiaire de fer doux se met à oxyder ou à rouiller tel que décrit dans la réalisation nommée en premier lieu. L'unique différence entre la première réalisation et celle-ci est que l'effet de rouille reste invisible plus longtemps.

La présente invention concerne une marmite qui a pour but d'être utilisée sur une plaque de cuisson à induction, c'est-a-dire où le réchauffement se passe sous l'influence d'un champ magnétique, de telle manière qu il est évident qu'une couche de fer doux doit être prévue.

La couche de fer doux est appliquée, suivant l'invention, de telle manière qu'elle fonctionne efficacement, mais où quelque formation de rouille est exclue.

La marmite suivant l'invention comprend à cet effet la marmite (1) en soi sous laquelle un premier disque (4) de fer doux et un deuxième disque (5) en acier inoxydable sont attachés, par exemple par soudure à haute ou moyenne fréquence de telle manière que le disque de fer doux est totalement isolé de l'atmosphère ambiante.

Dans une réalisation particulière cet enclavement du disque de matière magnétique est réalisé par son encerclement d'un anneau de matière non magnétique, par exemple de cuivre.

En vue de mieux démontrer les caractéristiques de l'invention une réalisation préférentielle est décrite ci-après avec référence aux dessins en annexe, en tant qu'exemple sans aucun caractère limitatif, dans laquelle :

la figure 1 est une vue démontée en coupe des parties principales d'une marmite suivant l'invention ;

la figure 2 est une vue similaire à celle de la figure 1, mais après avoir effectué un premier assemblage ;

la figure 3 est une vue combinée de la marmite suivant l'invention ;

la figure 4 est une vue à plus grande échelle de la partie indiquée par F4 dans la figure 3.

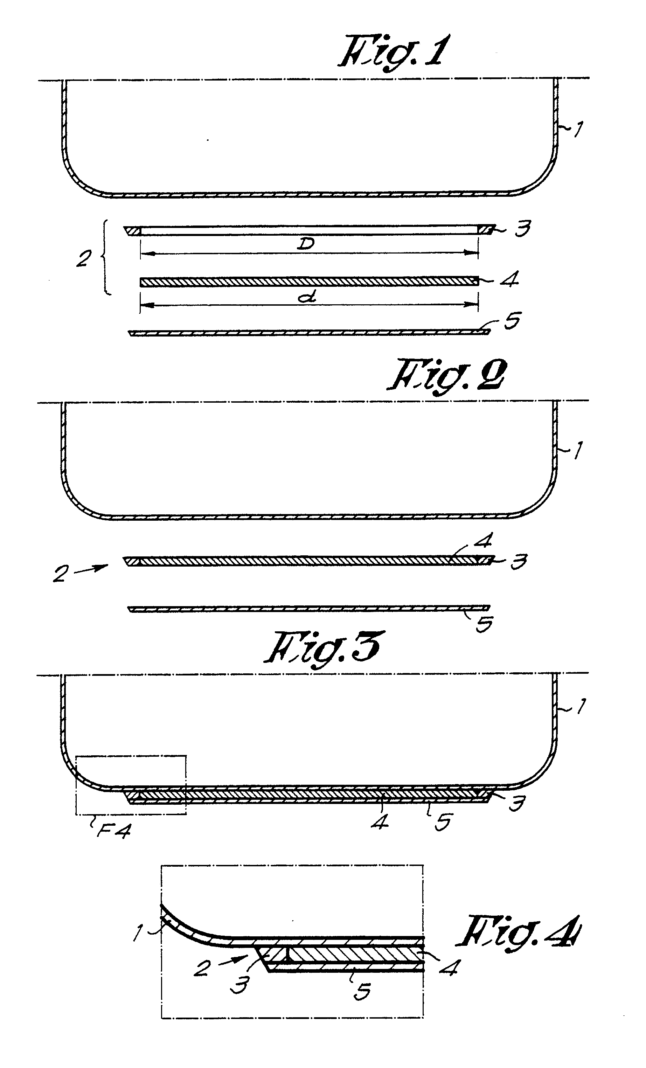

Tel que représenté dans la figure 1, la marmite suivant l'invention, plus particulièrement le fond de cette marmite, est principalement formée par la marmite 1 en soi, un fond intermédiaire 2 formé par un anneau 3 d'une matière non magnétique, par exemple du cuivre et d'un disque 4 en matière magnétique, c'est-a-dire du fer doux, et un disque 5, où la marmite 1 et le disque 5 sont réalisés en acier inoxydable.

Suivant la présente invention le disque 4 de fer doux possède un diamètre extérieur d'réalisé de telle manière par rapport au diamètre intérieur 'D' de l'anneau 3 que, lorsque le disque 4 est placé dans l'anneau 3, par compression, ces deux parties se rattachent de manière adéquate et restent reliées l'une à l'autre.

La marmite suivant l'invention sera alors complétée par la liaison de la plaque 2 avec le disque 5, par exemple par soudure à haute fréquence, et de les fixer sous le fond de la marmite 1.

De cette manière une marmite dont le fond est formé dans une matière inoxydable, c'est-a-dire le fond de la marmite 1, le disque 5 et l'anneau 3, ces trois éléments enrobant le disque de fer doux 4, étant totalement étanche à l'atmosphère ambiante, est réalisée.

Il est évident que la formation de rouille est exclue par l'application de cette procédure.

Il est évident que la présente invention n'est nullement limitée à la réalisation décrite en tant qu'exemple et représentée dans les dessins en annexe, mais que lAdite marmite peut être réalisée en toute sorte de formes et de dimensions sans dépasser le cadre de la présente invention.

## Revendications

1.- Marmite pour l'utilisation sur plaques de cuisson, caractérisée en ce qu'elle est principalement formée par la marmite (1) en soi en acier inoxydable sous laquelle un premier disque (4) de fer doux et un deuxième disque (5) en acier inoxydable sont attachés, par exemple par soudure à haute fréquence ou à fréquence moyenne, de telle manière que le disque de fer doux est entièrement étanche à l'atmosphère ambiante.

2.- Marmite suivant la revendication 1, caractérisée en ce que le disque de fer doux (4) est entouré d'un anneau de matière non magnétique (3).

3.- Marmite suivant l'une des revendication 1 ou 2, caractérisée en ce que le disque (4) est pressé dans l'anneau de matière non magnétique (3) avant d'être fixé sous la marmite en soi (1).

4.- Marmite suivant l'une des revendications précédentes, caractérisée en ce que l'anneau de matière non magnétique (3) consiste de cuivre.

## Fig.1

## Fig.2

## Fig.3

## Fig.4